(19) Europäisches Patentamt
European Patent Office
Office européen des brevets

(11) Publication number: 0 063 817
B1

(12) **EUROPEAN PATENT SPECIFICATION**

(45) Date of publication of patent specification: 13.03.85

(51) Int. Cl.[4]: C 09 D 5/38, C 09 D 3/82

(21) Application number: 82103574.8

(22) Date of filing: 27.04.82

# (54) Metallic base paint.

(30) Priority: 27.04.81 JP 64780/81

(43) Date of publication of application:
03.11.82 Bulletin 82/44

(45) Publication of the grant of the patent:
13.03.85 Bulletin 85/11

(84) Designated Contracting States:
BE DE FR GB IT

(56) References cited:
US-A-4 131 571
US-A-4 157 321
US-A-4 239 539

PATENT ABSTRACTS OF JAPAN, unexamined applications, Section C, vol. 5, no. 89, June 19, 1981 THE PATENT OFFICE JAPANESE GOVERNMENT, Page 56 C 612

(73) Proprietor: KANEGAFUCHI KAGAKU KOGYO KABUSHIKI KAISHA
2-4 Nakanoshima 3-chome
Kita-ku Osaka-shi (JP)

(72) Inventor: Kato, Yasushi
1-11-3, Katayama-cho Nagata-ku
Kobe-chi Hyogo-ken (JP)
Inventor: Furukawa, Hisao
122-402, 1-2, Hiyodoridai Kita-ku
Kobe-shi Hyogo-ken (JP)

(74) Representative: Vossius Vossius Tauchner Heunemann Rauh
Siebertstrasse 4 P.O. Box 86 07 67
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a metallic base paint. More particularly, it relates to a composition useful as a metallic base paint and containing a silyl group containing vinyl type resin containing at least one silicon atom attached to a hydrolyzable group at the terminal or in a side chain in the molecule.

The present inventors had previously discovered that vinyl type resins containing at least one silicon atom attached to a hydrolyzable group at the terminal or in a side chain in the molecule have, in addition to the excellent characteristics inherent to the vinyl type resins, e.g. high luster, weather resistance, discoloration resistance etc., improved adhesion to inorganic substances due to the hydrolyzable silyl group and further can form minute networks by crosslinking at ambient temperature by moisture, especially by atmospheric moisture, thereby providing resins having excellent solvent resistance, water resistance, heat resistance, high hardness, weather resistance etc., and filed an application for a patent based on this (Japanese Patent Application Laid-open No. 36395/1979).

Generally, the metallic luster coating is achieved by coating a metallic base paint containing a metal powder, e.g. an aluminum powder etc., and either while it is wet or after it has been dried, coating a topcoat transparent paint, and drying it. Recently, however, to meet strong demand for the speed-up of the coating step, it is being more frequently practised to coat a base paint and thereafter coat a topcoat at only a brief interval. Such a tendency is accompanied by a problem, that is, after the topcoat has been applied to the coated metallic base paint, the metal powder distributed in the paint is swept away, or the resin in the base paint is dissolved by coating the topcoat to sweep away the metal powder, and thus the metallic luster is rendered non-uniform. In general, in order to solve such a problem, measures such as use of a high molecular weight resin or a highly volatile solvent are taken. However, these measures are restricted in the choice of the kinds of resin and solvent or diluent.

As the result of intensive study, the present inventors have finally discovered a composition for a metallic base paint which has successfully reduced the coating interval between the coating of the metallic base paint and the coating of the topcoat transparent paint (hereinafter referred to as the setting time) and hence has good workability and further provides a coated surface of uniform metallic luster.

Accordingly, this invention resides in a metallic base paint which comprises a silyl group containing vinyl type polymer in which the backbone is substantially composed of a polyvinyl type polymer chain and which contains at least one silicon atom attached to a hydrolyzable group at the terminal or in a side chain in the molecule (A), and a metal powder (B) and an acrylic resin (C) and/or a cellulosic compound (D) and/or a reactive silicon compound (E).

The resin used in this invention is that in which the backbone is substantially composed of a polyvinyl type polymer chain and which contains at least one, and preferably 2 or more, silyl groups attached to hydrolyzable groups at the terminals or in side chains in the molecule; most of the silyl groups are represented by

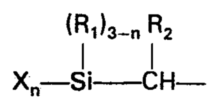

wherein X is a hydrolyzable group, $R_1$ and $R_2$ are each hydrogen or an alkyl group, aryl group or aralkyl group of 1—10 carbon atoms, and n is an integer of 1, 2 or 3.

Examples of the hydrolyzable group include halogen, alkoxy, acryloxy, ketoxymate, amido, acid amido, aminoxy, mercapto, alkenyloxy groups etc.

The production of the silyl group containing vinyl type resin according to this invention may be effected in various manners, among which (i) a hydrosilylation reaction using a vinyl type resin having a carbon—carbon double bond and a hydrosilane and (ii) a copolymerization of a vinyl type compound and a silyl compound having a polymerizable double bond hereinbelow described are industrially advantageous processes. These two representative processes are more particularly described below.

Process (i)

The silyl group containing vinyl type resin of this invention may be easily produced by reacting a hydrosilane compound with a vinyl type resin having a carbon—carbon double bond in the presence of a catalyst of a Group VIII transition metal. The hydrosilane compound used in this invention is that having the following general formula:

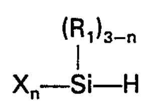

wherein $R_1$ is hydrogen or a monovalent hydrocarbon group selected from an alkyl group, aryl group or aralkyl group having 1—10 carbon atoms, X is a hydrolyzable group, and n is an integer of 1—3.

Specific examples of the hydrosilane compound within this general formula include halogenated

silanes such as methyldichlorosilane, trichlorosilane, or phenyldichlorosilane; alkoxysilanes such as methyldiethoxysilane, methyldimethoxysilane, phenyldimethoxysilane, trimethoxysilane, or triethoxysilane; acetoxysilanes such as methyldiacetoxysilane, phenyldiacetoxysilane, or triacetoxysilane; and other various silanes such as methyldiaminoxysilane, triaminoxysilane, methyldiaminosilane, triaminosilane, bis(dimethylketoxymate)methylsilane, bis(cyclohexylketoxymate)methylsilane, methyldiisopropenoxysilane, or triisopropenoxysilane.

The amount of the hydrosilane compound used can be any, but is preferably 0.5—2 moles per carbon—carbon double bond contained in the vinyl type resin. Although the use of the silane in an amount beyond this range is not excluded, no benefit is obtained but the unreacted hydrosilane is merely recovered.

Further, a highly reactive halogenated silane which is an inexpensive basic starting material may easily be employed as the hydrosilane compound in this invention. The silyl group containing vinyl type resin obtained by using a halogenated silane, when exposed in air, rapidly cures at ambient temperature while emitting hydrogen chloride, but suffers from such problems as the generation of a pungent odor due to hydrogen chloride and the corrosion of substances in contact with or adjacent to it, and hence it can only be employed in limited practical applications; it is therefore desirable to subsequently further convert the halogen functional group to other hydrolyzable functional groups. For example, it may be converted to alkoxy, acryloxy, aminoxy, amido, acid amido, ketoxymate, mercapto and the like groups according to the method disclosed in Japanese Patent Application Laid-open No. 91546/1979.

The vinyl type resin to be used in Process (i) in this invention is not particularly limited, except that vinyl type resins containing hydroxyl groups are excluded, and a resin comprising as the main component a homopolymer or a copolymer selected from the following is suitable: acrylic acid or methacrylic acid esters such as methyl acrylate, methyl methacrylate, ethyl acrylate, ethyl methacrylate, butyl acrylate, butyl methacrylate, 2-ethylhexyl acrylate, or 2-ethylhexylmethacrylate; carboxylic acids such as acrylic acid, methacrylic acid, itaconic acid, or fumaric acid and acid anhydrides such as maleic anhydride; epoxy compounds such as glycidyl acrylate, or glycidyl methacrylate, amino compounds such as diethylaminoethyl acrylate, diethylaminoethyl methacrylate, or aminoethyl vinyl ether; amido compounds such as acrylamide, methacrylamide, itaconic acid diamide, $\alpha$-ethylacrylamide, crotonamide, fumaric acid diamide, maleic acid diamide, N-butoxymethylacrylamide, or N-butoxymethylmethacrylamide; acrylonitrile, iminol methacrylate, styrene, $\alpha$-methylstyrene, vinyl chloride, vinyl acetate, vinyl propionate etc. On producing a homopolymer or a copolymer of these vinyl compounds, allyl acrylate, allyl methacrylate, diallyl phthalate or the like may be partially radical polymerized therewith to incorporate a carbon—carbon double bond into the vinyl type resin at the molecule terminal or in a side chain for the hydrosilylation reaction. The amount of the monomer necessary for this can be determined depending on the number of silyl groups in the desired resin. Further, the molecular weight may be modified by adding a chain transfer agent such as n-dodecylmercaptan, or t-dodecylmercaptan, Polymerization of these vinyl compounds may be conducted either using or not using a solvent, and, if used, the use of a non-reactive solvent such as an ether, hydrocarbon, or acetic acid ester is preferred.

In this invention, a catalyst of a transition metal complex is required in the stage of reacting the hydrosilane compound with the carbon—carbon double bond. Effectively employed as the transition metal complex catalyst is a complex of a Group VIII transition metal selected from platinum, rhodium, cobalt, palladium and nickel. This hydrosilylation reaction may be effected at any temperature of from 50—150°C, and the reaction time is 1—10 hours or so.

Process (ii)

The other process in this invention comprises radical polymerizing a silane compound of the formula:

$$R_3—\overset{\overset{(R_1)_{3-n}}{|}}{Si}—X_n$$

wherein $R_1$ is a monovalent hydrocarbon group selected from an alkyl group, aryl group and aralkyl group having 1—10 carbon atoms, $R_3$ is an organic residue containing a polymerizable double bond, X is a hydrolyzable group, and n is an integer of 1, 2 or 3, with various vinyl type compounds.

Examples of the silane compound used in this invention include:

$$CH_2{=}CH\overset{\overset{CH_3}{|}}{Si}(OCH_3)_2, \qquad CH_2{=}CH\overset{\overset{CH_3}{|}}{Si}Cl_2,$$

$$CH_2{=}CHSi(OCH_3)_3, \qquad CH_2{=}CHSiCl_3,$$

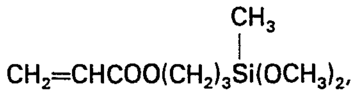, $CH_2=CHCOO(CH_2)_3Si(OCH_3)_3$,

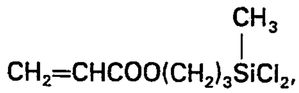, $CH_2=CHCOO(CH_2)_3SiCl_3$,

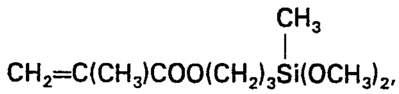, $CH_2=C(CH_3)COO(CH_2)_3Si(OCH_3)_3$,

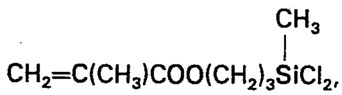, $CH_2=C(CH_3)COO(CH_2)_3SiCl_3$,

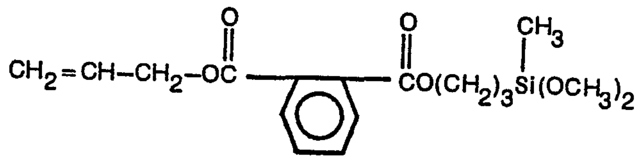,

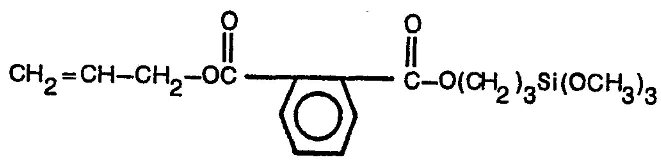,

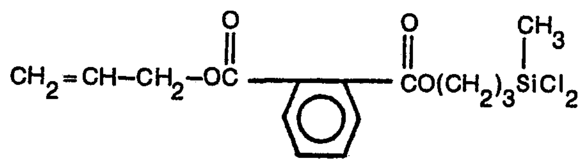,

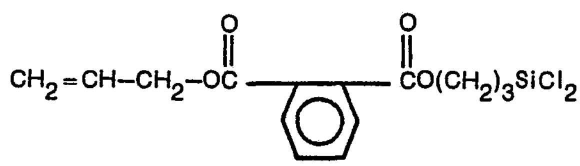 etc.

These silane compounds may be synthesized in various manners, and, for example, they may be produced by reacting acetylene, allyl acrylate, allyl methacrylate or diallyl phthalate with methyldimethoxysilane, methyldichlorosilane, trimethoxysilane or trichlorosilane in the presence of a catalyst of a Group VIII transition metal.

While the compounds used for the synthesis of the vinyl type resins in the above-described Process (i) may be used as the vinyl type compounds to be used in this process, there may also be employed, in addition to those described under Process (i), such vinyl type compounds containing a hydroxyl group as 2-hydroxyethyl acrylate, 2-hydroxyethyl methacrylate, 2-hydroxypropyl acrylate, 2-hydroxypropyl methacrylate, 2-hydroxyvinyl ether, N-methylol acrylamide, or ARONIX 5700 (produced by Toa Gosei Chemical).

The synthesis of a copolymer of such vinyl type compounds and silane compounds may be carried out by the conventional solution polymerization method. The vinyl type compound, the silane compound, a radical initiator, and a chain transfer agent such as n-dodecylmercaptan, or t-dodecylmercaptan, according to the necessity in order to obtain a silyl group containing copolymer having an appropriate molecular weight, are added and reacted at 50—150°C. A solvent may optionally be used, and, if used, the use of a non-reactive solvent such as an ether, hydrocarbon, or acetic acid ester is preferred.

The silyl group containing vinyl type resin thus obtained may be subjected to, e.g. the method

disclosed in Japanese Patent Application Laid-open No. 91546/1979, to displace the hydrolyzable group.

Thus, there is obtained a silyl group containing vinyl type resin in which the backbone is substantially composed of a vinyl type polymer and which contains at least one silicon atom attached to a hydrolyzable group at the terminal or in a side chain in the molecule.

As the metal powder (B) used in this invention, an aluminum powder, a zinc powder and other metal powders conventionally employed in metallic base paints are employed either alone or as a mixture.

The acrylic resin (C) used in this invention is not particularly restricted, and there may be employed, for example, acryl resins such as ALOMATEX and OLESTER produced by Mitsui Toatsu Chemicals, COATAX produced by Toray Industries, ACRIC produced by Kansai Paint, NIPPE ACRYL produced by Nippon Paint, homopolymers of acrylic acid esters or methacrylic acid esters and copolymers of each of those with other vinyl monomers, as well as straight acryl lacquers, or modified acryl lacquers. Further, it is also possible to use an acrylic resin obtained by copolymerizing vinyl type compounds in the presence of a cellulosic compound.

As the cellulosic compound (D) used in this invention, there may be employed nitrocellulose, acrylcellulose, cellulose acetate butyrate, cellulose acetate propionate, ethylcellulose, benzylcellulose etc.

As the reactive silicon compound (E) used in this invention, there may be employed, for example, silane coupling agents such as A-143, A-151, A-172, A-174, A-186, A-187, A-189, A-1100, A-1120, or A-1160 produced by Nippon Unicar Co., Ltd., silicon type primers such as AP-133, AP-3109, Y-5106, Y-5252 produced by Nippon Unicar Co., Ltd.; amine containing at least one silicon atom attached to a hydrolyzable group in the molecule; reaction products of a silane coupling agent containing an amino group such as A-1100, or A-1120 produced by Nippon Unicar Co.; Ltd. with a silane coupling agent containing an epoxy group such as A-185, or A-187; reaction products of the above-described silane coupling agent containing an amino group with a compound containing an epoxy group such as ethylene oxide, butylene oxide, epichlorohydrin, or epoxylated soybean oil, and Epicoat 828, or Epicoat 1001 produced by Shell Co.; reaction products of the above-described silane coupling agent containing an epoxy group with an amine, for example, aliphatic amines such as ethylamine, diethylamine, triethylamine, ethylenediamine, hexanediamine, diethylenetriamine, triethylenetetramine, or tetraethylenepentamine, aromatic amines such as aniline, or diphenylamine, alicyclic amines such as cyclopentylamine, or cyclohexylamine, ethanolamines; reaction products obtained by adding water and, if necessary, an acidic or alkaline catalyst to the above-described silane coupling agent containing an amino group and a compound containing a hydrolyzable silyl group such as ethyl silicate, ethyl silicate 40, methyltrimethoxysilane, methyltriethoxysilane, the above-described A-151, A-172, A-174, A-186, A-187 or A-1160 and partially hydrolyzed; and the like.

Although the compositional proportion of the respective components of the metallic base paint in this invention is not particularly restricted, generally employed are 0.5—100 parts by weight of the metal powder (B), 0.01—100 parts by weight, preferably 0.1—80 parts by weight, of the acrylic resin (C) and/or the cellulosic compound (D) and 0.01—50 parts by weight, preferably 0.1—30 parts by weight, of the reactive silicon compound (E) per 100 parts by weight of the vinyl type resin containing at least one silicon atom attached to a hydrolyzable group at the terminal or in a side chain in the molecule (A) or 1—50 parts by weight of (B) and 0.01—100 parts by weight, preferably 0.1—80 parts by weight, of (C) and/or (D) per 100 parts by weight of (A), or 0.01—50 parts by weight, preferably 0.1—30 parts by weight, of (E) per 100 parts by weight of (A). Further, conventionally employed pigment, solvent or diluent, curing accelerator etc. may also be contained.

By mixing the above-described Component (A), and Component (B), and/or Component (C) and/or Component (D) and optionally further Component (E) and using the mixture as a metallic base paint, a metallic coat having good coating workability with improved metallic evenness may be obtained.

There is no particular restriction on the topcoat clear paint to be used when forming a metallic coat by using the metallic base paint of this invention, and, for example, conventionally employed lacquers, acryl lacquers, modified acryl lacquers, straight acryl, acryl melamines, alkyd melamines, two-pack type acryl urethane lacquers, two-pack type acryl urethanes, or two-pack type polyester urethanes and also resins having a hydrolyzable silyl group as herein disclosed may be employed.

The metallic base paint of this invention forms a metallic base coat at ambient temperature or by heating, and at that time, a curing accelerator may optionally be employed; where a curing accelerator is employed, carboxylic acid metal salts such as alkyl titanic acid salts, tin octylate, dibutyltin dilaurate, or lead octylate, sulfide type and mercaptide type organic tin compounds such as monobutyltin sulfide, or dibutyltin dioctyl mercaptide, acidic accelerators such as p-toluenesulfonic acid, or phthalic acid, amines such as tetraethylenepentamine, triethylenediamine, or N-$\beta$-aminoethyl-$\gamma$-aminopropyltrimethoxysilane, alkaline accelerators such as potassium hydroxide, sodium hydroxide, are effective. The amount of these curing accelerators to be added is preferably in the range of 0.001—10% by weight based on the solids of the silyl group containing vinyl type resin.

Since the metallic base paint of this invention cures at ambient temperature or low temperatures to afford a resin having excellent adhesion to the surface of a substrate, it is useful as a metallic base

paint for surfaces of inorganic substances (e.g. iron plates, tinplates, galvanized plates, aluminum plates, zinc steel plates, tiles, or slate plates) and organic substances (e.g. wood, paper, plastics, or coats of organic paints). For example, in the automobile application, while it is usable as a coating for exterior surfaces in the production line, it is effective for repairing automobiles especially because of its capability of curing at low temperatures.

This invention is now more particularly described by the following examples.

Example 1

A solution of 2 g of azobisisobutylonitrile in 30 g of styrene, 16 g of allyl methacrylate, 20 g of methyl methacrylate, 19 g of n-butyl methacrylate, 14 g of butyl acrylate, 4 g of maleic anhydride and 1 g of n-dodecylmercaptan were added dropwise to 90 g of a xylene solvent heated to 90°C and reacted for 10 hours to obtain a vinyl type polymer containing allyl type unsaturated groups and having a molecular weight of 12,000. The infrared spectrum of this product showed an absorption of the carbon—carbon double bond at 1648 $cm^{-1}$ and an absorption of the acid anhydride at 1780 $cm^{-1}$. The resultant solution was distilled under reduced pressure to remove 40 g of the solvent.

To 16 g of the obtained solution of the vinyl copolymer containing allyl type unsaturated groups was added a solution of 1.5 g of methyldimethoxysilane and 0.0005 g of chloroplatinic acid in isopropanol, and the reaction was effected under sealed conditions at 90°C for 6 hours. In the infrared spectrum of this, the absorption at 1648 $cm^{-1}$ did no longer exist, and thus the silyl group containing vinyl type polymer was obtained.

Example 2

A solution of 1 g of azobisisobutylonitrile in 30 g of styrene, 22 g of $\gamma$-methacryloxypropyltrimethoxysilane, 22 g of methyl methacrylate, 15 g of n-butyl methacrylate and 18 g of butyl acrylate was added dropwise to 70 g of xylene heated to 90°C, and reacted for 10 hours to obtain a silyl group containing vinyl type resin having a molecular weight of 30,000.

Example 3

A solution of 1 g of azobisisobutylonitrile in 30 g of styrene, 11 g of $\gamma$-methacryloxypropyltrimethoxysilane, 33 g of methyl methacrylate, 15 g of n-butyl methacrylate, 18 g of butyl acrylate, 4 g of acrylamide, 10 g of n-butanol was added dropwise to 70 g of xylene, heated to 120°C, and reacted for 10 hours to obtain a silyl group containing vinyl type resin having a molecular weight of 12,000.

Example 4

A solution of 2 g of azobisisobutylonitrile in 22 g of $\gamma$-methacryloxypropyltrimethoxysilane, 52 g of methyl methacrylate, 13 g of n-butyl methacrylate, 18 g of butyl acrylate, 4 g of acrylamide, 10 g of n-butanol and 1 g of n-dodecylmercaptan was added dropwise to 70 g of xylene, heated to 90°C, and reacted for 10 hours to obtain a silyl group containing vinyl type resin having a molecular weight of 12,000.

To each of the resin solutions obtained in Examples 1—4 described above were added 40 parts by weight of aluminum paste (1109MA produced by Toyo Aluminum) per 100 parts by weight of the resin solids, followed by the acrylic resin, cellulosic compound, reactive silicon compound and curing accelerator set forth in Table 1, the mixture was diluted with a solvent (butyl acetate/ethyl acetate=1 in the weight ratio) to the coating viscosity (15 seconds with Ford Cup No. 4) and the obtained metallic base paint was spray coated on a soft steel plate. After 2 minutes setting time, the resin solution obtained in Example 2 was diluted with the same solvent as above to the coating viscosity and cast on the above metallic base paint coat, said soft steel plate was stood against a stand, and the movement of the metal in the metallic base was examined to measure the setting time at which the metal movement ceased. The results of the measurement are shown in Table 1.

TABLE 1

| Silyl group containing vinyl type resin (A) | Acrylic resin (C) (pts. b. w. per 100 pts. b. w. of the resin solids in example) | Cellulosic compound (D) (same as the left) | Reactive silicon compound (E) (same as the left) | Curing accelerator (same as the left) | Setting time (min) |
|---|---|---|---|---|---|
| Example 1 | Kansai Paint ACRIC 200 GL (15) | Daisel RS 1/2 (5) | | Dibutyltine dilaurate (3) | 10 |
| Example 2 (Comparative) | | | | Sankyo Organic Stann OM (3) | 60 |
| Example 2 | | Kodak CAB551.0.2 (20) | | Same as above | 10 |
| Example 2 | Nippon Paint NIPPE ACRYL (15) | | Nippon Unicar A-1120 (0.5) | Same as above | 10 |
| Example 3 | | | Nippon Unicar AP-133 (2) | Sankyo Organic Stann ONZ-22 (3) | 5 |
| Example 3 | Mitsui Toatsu ALOMATEX 894—2 (10 | Daisel RS 1/2 | Nippon Unicar A-1100 (0.5) | Same as above | 5 |
| Example 4 | Mitsui Toatsu ALOMATEX L—1042 (10) | Kodak CAB551.0.2 (30) | | Sankyo Organic Stann ONJ-IF (8) | 10 |
| Example 4 | | Kodak CAB551.0.2 (30) | Nippon Unicar A-1100 (0.5) | Same as above | 10 |

As shown above, although even where only the curing accelerator is added, this can be practised by allowing a long setting time, a great reduction in setting time can be achieved by adding the acrylic resin, the cellulosic resin and/or the reactive silicon compound.

**Claims**

1. A metallic base paint which comprises a silyl group containing vinyl type polymer in which the backbone is substantially composed of a polyvinyl type polymer chain and which contains at least one silicon atom attached to a hydrolyzable group at the terminal or in a side chain in the molecule (A), and a metal powder (B), and an acrylic resin (C), and/or a cellulosic compound (D), and/or a reactive silicon compound (E).

2. The metallic base paint according to Claim 1 wherein the metal powder (B) is an aluminum powder.

3. The metallic base paint according to Claim 1 wherein the cellulosic compound (D) is nitrocellulose.

4. The metallic base paint according to Claim 1 wherein the cellulosic compound (D) is cellulose acetate butyrate.

5. The metallic base paint according to Claim 1 wherein the reactive silicon compound (E) is a single silane coupling agent or a mixture of two or more thereof.

6. The metallic base paint according to Claim 1 wherein the reactive silicon compound (E) is a silicon type primer.

7. The metallic base paint according to Claim 1 wherein the reactive silicon compound (E) is a single amine compound containing at least one silicon atom attached to a hydrolyzable group in the molecule or a mixture of two or more thereof.

**Patentansprüche**

1. Ein metallhaltiges Grundanstrichmittel (Grundlack), das ein silylgruppenhaltiges Polymerisat vom Vinyltyp, in welchem das Gerüst im wesentlichen aus einer Polymerisatkette vom Polyvinyltyp besteht und welches mindestens ein Siliciumatom an eine hydrolysierbare Gruppe am Ende oder in einer Seitenkette in dem Molekül (A) enthält, und ein Metallpulver (B), und ein Acrylharz (C) und/oder eine Celluloseverbindung (D) und/oder eine reaktive Siliciumverbindung (E) umfaßt.

2. Der metallhaltige Grundlack nach Anspruch 1, wobei das Metallpulver (B) ein Aluminiumpulver ist.

3. Der metallhaltige Grundlack nach Anspruch 1, wobei die Celluloseverbindung (D) Nitrocellulose ist.

4. Der metallhaltige Grundlack nach Anspruch 1, wobei die Celluloseverbindung (D) Celluloseacetatbutyrat ist.

5. Der metallhaltige Grundlack nach Anspruch 1, wobei die reaktive Siliciumverbindung (E) ein einzelnes Silan-Kupplungsmittel oder ein Gemisch von mindestens zwei davon ist.

6. Der metallhaltige Grundlack nach Anspruch 1, wobei die reaktive Siliciumverbindung (E) ein Primer vom Siliciumtyp ist.

7. Der metallhaltige Grundlack nach Anspruch 1, wobei die reaktive Siliciumverbindung (E) eine einzelne Aminoverbindung, die mindestens ein Siliciumatom an eine hydrolysierbare Gruppe in dem Molekül gebunden enthält, oder ein Gemisch von mindestens zwei davon ist.

**Revendications**

1. Peinture métallique pour couche de fond, comprenant un polymère de type vinylique contenant un groupe silyle, dans lequel le tronc ou squelette est essentiellement constitué d'une chaîne polymère de type polyvynilique et qui contient au moins un atome de silicium attaché à un groupe hydrolysable en fin de chaîne ou dans une chaîne latérale de la molécule (A), et une poudre métallique (B), et une résine acrylique (C) et/ou un composé cellulosique (D) et/ou un composé de silicium réactif (E).

2. Peinture métallique pour couche de fond suivant la revendication 1, caractérisée en ce que la poudre métallique (B) est une poudre d'aluminium.

3. Peinture métallique pour couche de fond suivant la revendication 1, caractérisée en ce que le composé cellulosique (D) est de la nitrocellulose.

4. Peinture métallique pour couche de fond suivant la revendication 1, caractérisée en ce que le composé cellulosique (D) est l'acétobutyrate de cellulose.

5. Peinture métallique pour couche de fond suivant la revendication 1, caractérisé en ce que le composé de silicium réactif (E) est un seul agent de couplage de silane ou un mélange de deux ou plus de ceux-ci.

6. Peinture métallique pour couche de fond suivant la revendication 1, caractérisé en ce que le composé de silicium réactif (E) est un agent d'amorçage du type à base de silicium.

7. Peinture métallique pour couche de fond suivant la revendication 1, caractérisée en ce que le composé de silicium réactif (E) est un composé aminé unique contenant au moins un atome de silicium attaché à un groupe hydrolysable de la molécule ou un mélange de deux ou plus de ces composés.